# EUROPÄISCHE PATENTANMELDUNG

(11) **EP 0 960 923 A1**
(43) Veröffentlichungstag der Anmeldung: **01.12.1999**
(21) Anmeldenummer: 99109834.4
(22) Anmeldetag: 19.05.1999
(51) Int. Cl.: C09J 107/02, C09J 7/02

(54) **Verfahren zur Herstellung von Haftklebemassen aus Naturkautschuklatex und damit hergestellte Klebebänder und Etiketten**

(30) Priorität: 29.05.1998 DE 19824071
(71) Anmelder: Beiersdorf Aktiengesellschaft, 20245 Hamburg (DE)
(72) Erfinder: Müssig, Bernhard, Dr., 21218 Seevetal (DE); Kozaczka, Zygmut, 22299 Hamburg (DE); Zielske, Dieter, 25355 Barmstedt (DE); Stähr, Jochen, 30179 Hannover (DE); Hirsch, Ralf, 25451 Quickborn (DE)

(57) **Zusammenfassung**

Verfahren zur Herstellung einer Haftklebemasse, dadurch gekennzeichnet, daß man Klebrigmacher in dispergierter, geschmolzener oder fester Form mit Naturkautschuklatex mischt, wobei der Wassergehalt maximal 45 Gew.-% beträgt.

## Beschreibung

### Stand der Technik

Naturkautschuk ist das ideale Elastomer zur Herstellung von Klebebändern, sofern keine hohe Alterungsbeständigkeit gefordert ist. Besondere Vorteile sind:
- der niedrige Preis des Elastomers
- der niedrige Preis der geeigneten Klebrigmacher (Harze usw.)
- das ausgewogene Verhältnis zwischen den physikalischen Eigenschaften wie Abrollkraft, Scherfestigkeit, Tack und Klebkraft.

Bisher kann der Naturkautschuk nur aus Lösung verarbeitet werden. Es hat nicht an Versuchen gefehlt, den Naturkautschuk auch als wäßriges System zu verarbeiten. Die technische Realisierung scheitert an der extremen Scherempfindlichkeit des Latex, nur durch Zusatz größerer Mengen an oberflächenaktiver Stoffe oder Abmischung mit anderen Latices kann man ein gewisses Maß an Verarbeitbarkeit erreichen, jedoch nur unter starkem Verlust des angestrebten Eigenschaftsprofils.

Die Verarbeitung von Naturkautschukmassen aus der Schmelze war bisher nicht möglich. Versucht man Haftschmelzklebemassen herzustellen, so ist für eine Homogenisierung eine starke und länger andauernde Scherung notwendig. Diese bewirkt einen starken Abbau und dadurch Verlust an Performance des Klebebandes, trotzdem lassen sich Kautschukstippen nicht ganz vermeiden. Es wurde versucht, die Homogenität zu verbessern, indem der Kautschuk geschert (mastifiziert), dann ein Batch mit einem Teil des Klebrigmachers hergestellt und dieser dann in einem weiterem Schritt unter Zugabe weiterer Rohstoffe zur Klebemasse verarbeitet wird: Dieses Verfahren wird in der WO 94/11175 beschrieben. Die WO 95/25774 belegt ebenfalls, daß eine Verarbeitung von nichtthermoplastischem Material nur unter Mastifikation, welches das Polymer nachteiligeiweise abbaut, möglich ist. Ein weiterer Nachteil aller Verfahrensversuche mit festem Kautschuk ist die Notwendigkeit des Batch-Betriebes, welches die Fertigungskosten und den Qualitätsregelungsaufwand in die Höhe treibt. Derartige Klebemassen kommen bisher nur für die Fertigung von Gewebeklebebändern unterster Qualität in Verwendung (Duct Tapes). Wegen der genannten Probleme sind thermoplastische Elastomere (Styrol-Dien-Blockcopolymere) entwickelt worden, die diese Nachteile weitgehend vermeiden. Diese ergeben aber trotzdem deutlich andere Produkteigenschaften als Naturkautschuk. So ist es auf diese Art und Weise bisher nicht möglich hochwertige Produkte herzustellen, z. B. leicht wiederablösbare Folienklebebänder oder Lackierklebebänder auf Papierbasis. Ein wesentlicher Mangel solcher Klebemassen aus thermoplastischen Kautschuken ist die geringe Wärmebeständigkeit. Die Alterungsbeständigkeit ist ebenfalls deutlich ungünstiger als bei Naturkauschukklebemassen. Weiterhin sind derartige Rezepturen sowohl vom Elastomer als auch von den geeigneten Klebrigmachern deutlich teuer als solche auf Basis Naturkautschuk.

Der Naturkautschuk fällt als Latex an. Aus ihm wird der handelsübliche Festkautschuk durch Fällung gewonnen. Ohne Verwendung von Lösungsmittel ist nicht möglich, Festkautschuk als Ballen oder Granulat mit Klebrigmachern, Füllstoffen, Antioxidanten, Weichmachern etc. völlig homogen zu vermischen und obendrein die damit verbundene Scherung und Abbau des Elastomers zu vermeiden. Wenn man den Latex mit einer Dispersion dieser Zusätze homogen mischt, entfällt sowohl das Probleme der homogenen Mischung der Komponenten als auch der Scherung und Abbau des Elastomers. Leider lassen sich solche wasserbasierenden Klebemassen in der Praxis wegen der extremen Koagulationsempfindlichkeit nicht auf Produktionsanlagen beschichten, da schon bei der Verarbeitung Gelteilchen oder völlige Koagulation auftritt.

### Erfindungsgemäßes Verfahren

Mischt man Naturkautschuklatex, geschmolzenen oder feinteiligen Klebrigmacher und ggf. weitere Komponenten in einem Mischer, Kneter; Extruder oder dergleichen, so ist die Mischung überraschenderweise homogen, weil die Latexmischung nicht vor Ende der vollständigen Zugabe und Durchmischung koaguliert. Im Einzelfall der Herstellung ist es vorteilhaft die Reihenfolge und Menge der Komponenten richtig zu wählen und die Scherbelastung der Mischung soll das notwendige Maß nicht überschreiten, da bei ungünstigen Bedingen eine vorzeitige Koagulation provozierbar ist. Durch Zusatz von Wasser, Ammoniak, Alkalilaugen oder oberflächenaktiven Stoffen wie Emulgatoren läßt sich die Stabilität erhöhen. Es ist beim Batch-Betrieb in der Regel am günstigsten, den Latex und die übrigen Komponenten nicht wechselweise zuzugeben, sondern entweder den gesamten Latex vorzulegen und die übrigen Komponenten einzumischen oder die übrigen Komponenten als Mischung vorzulegen und den gesamten Latex zuzugeben. Legt man den Latex vor, sollte als erster Zusatz der Weichmacher (sofern er erforderlich ist) genommen werden, dies gilt insbesondere für Mineralöle oder flüssige Kohlenwasserstoffharze. Auf diese Weise können alle gewünschten Komponenten leicht gemischt werden, bevor sich der Kautschuk durch Koagulation verfestigt. Dies ist verwunderlich, da der Latex nicht nur beim starken Rühren scherempfindlich ist, sondern dem Fachmann eine noch rührbare Mischung mit einem Festgehalt von 80 % und mehr nicht vorstellbar ist.

Die erfindungsgemäße Klebemassen sind je nach Rezeptur noch flüssig und damit direkt mit einem Auftragswerk verarbeitbar, klebrig zusammengeballt oder fallen als nichtklebriger leicht förderbarer Feststoff an. In der Regel tritt keine erkennbare Entmischung (z. B. Austritt der wäßrigen Phase) auf. Beispielsweise entstehen bei Verwendung von Hercolyn D-E flüssige Mischungen mit einem Wassergehalt von 10 bis 50 Gew.-%, diese lassen sich beschichten, bedürfen aber noch einer Nachtrocknung nach dem Beschichten. Bei Verwendung von sehr hohen Anteilen an Füllstoffen oder Pigmenten ergeben sich feste klebfrei förderbare Mischungen. Diese festen oder flüssigen Mischungen können einem z.B. Doppelschneckenextruder oder Planetwalzenextruder zugeführt werden, der in einem Entgasungsteil das restliche Wasser entfernt und dann eine Beschichtungsdüse oder Walzenauftragswerk beschickt. Mit dem Auftragswerk werden dann die Träger direkt oder indirekt (z.B. Beschichtung auf eine Walze oder einen Liner und Übertragung auf den Träger durch Kaschierung) beschichtet oder die Masse trägerlos auf einem Liner aufgetragen. Die Entwässerung kann auch durch Wärme oder Unterdruck in einem rührenden Aggregat wie Kneter oder Continuous Mixer erreicht werden, Innenmischer (Banbury) sind wegen der schwierigeren Entnahme der Klebemasse weniger geeignet. Die Massen sind (außer bei hohem Füllstoff- oder Pigmentanteil) schon ohne Kneten haftklebrig, die Diffusion reicht also schon aus um Kautschuk und Harz molekular penetrieren zu lassen. Dies zeigt wie leicht auf die erfindungsgemäße Weise Homogenität erreicht werden kann, ohne daß eine extreme Scherung wie bei festem Kautschuk erforderlich ist. Ein längeres Kneten im Batchbetrieb ist daher nicht erforderlich, es reicht schon die kurze Verweilzeit in einem Extruder aus, wodurch ein kontinuierlicher Fertigungsprozeß möglich wird. Es ist möglich die Vermischung des Latex mit den anderen Komponenten und die Entwässerung in einem Extruder durchzuführen. Das Harz kann z. B. nach der Dosierwaage eine Condux-Mühle passieren und dann der Einzugszone zugeführt werden, alternativ kann die Harzschmelze bei knapp 100 °C zugepumpt werden.

Wegen der kurzen Verweilzeiten bei Scherung der Klebemasse wird der Kautschuk nicht oder nur unbedeutend abgebaut. Daher weisen die erfindungsgemäßen Klebemassen insbesondere K-Werte von µ 80, vorzugsweise µ 125 und besonders bevorzugt µ 140 auf, diese ergeben gute Scherfestigkeiten. Es sind sogar Klebemassen mit K-Werten von etwa 160 möglich, welche in ihrer Scherfestigkeit selbst guten konventionellen Lösungsmittelmassen weit überlegen sind. Die K-Werte konventioneller Lösungsmittelmassen liegen etwa zwischen 130 und 150, bei Verwendung von CV-Kautschuk sogar noch erheblich niedriger. Besonders überraschend war die Tatsache, daß sich die erfindungsgemäßen Massen mit derartig hohen K-Werten problemlos beschichten lassen. Vermutlich nehmen die Kautschukpartikel (der ehemaligen Latextröpfchen) Harz und Weichmacher durch Quellung auf, ohne daß sich dabei die Kautschukpartikel gegenseitig ganz penetrieren und die Viskosität durch das Entanglement so stark ansteigt, wie der K-Wert erwarten läßt. Durch den Zusatz von Kautschuklatices mit niedrigen Mooney-Werten (wie sie z. B. zur Herstellung von CV 50 mit einem Mooney-Wert von 50 dienen) lassen sich die K-Werte der Massen noch regulieren, wodurch die Verarbeitungs- und klebtechnischen Eigenschaften anforderungsgerecht angepaßt werden können.

Die Beschichtungsstärke der Klebemassen kann insbesondere zwischen 2 g/m² und 3 kg/m² liegen. Je nach Anwendung und Träger sind Beschichtungsstärken von 12 bis 500 g/m² besonders geeignet, vorzugsweise zwischen 20 und 200 g/m².

Da bei diesem Verfahren Scherfestigkeiten in ausreichender bis herausragender Höhe erzielt werden können, ist eine zusätzliche Vernetzung nicht notwendig. Im Einzelfall kann eine Vernetzung sinnvoll sein, z. B. mit Gamma-, Ultraviolett- oder Elektronenstrahlen oder Vernetzungsharzen. Dies ist Anwendungen bei hohen Temperaturen wie bei Klebebändern für die KFZ-Lackierung oder bei Verwendung von Latex aus Kautschuk mit sehr niedriger Mooney-Viskosität möglich. Da die Bestrahlung den Träger schädigen kann, sollte die Dosis so gering wie möglich gehalten werden. Durch Anwendung von Photoiniatoren oder durch Zugabe von Estern des Allylalkohol, der Methacrylsäure oder der Acrylsäure zur Klebemasse kann die Strahlungsdosis verringert werden.

### Rohstoffe

Neben Kautschuk und Klebrigmacher können für die Klebemasse noch Additive wie Füllstoffe, Antioxidantien, Weichmacher oder Pigmente verwendet werden wie sie z. B. in Handbook of Pressure Sensitive Adhesive Technology, ed. Donatas Satas, N. Y. 1989, beschrieben werden oder Kautschukadditive wie Gleit- und Mastifizierungsmittel.

Für das erfindungsgemäße Verfahren und die daraus hergestellten Klebebänder sind die bekannten Naturkautschuklatices geeignet. Es empfiehlt sich, den Latex vor Verarbeitung zu filtrieren. Es handelt sich dabei um Naturkautschuklatices, die aufkonzentriert, chemisch behandelt und/oder mit Additiven versehen sind, näheres siehe 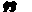 The Natural Rubber Formulatory and Property Index, Hrsg. Malaysian Rubber Producers' Research Association, 1984", 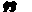 Ullmann's Encyclopedia of Chemical Industry, Bd. 23, S. 221 ff, VCH Weinheim 1993" und 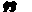 Encyclopedia of Polymer Science and Engineering, Vol 14, Seite 687 ff, J. Wiley & Sons, 1988". Auch unbehandelter frischer Latex ist geeignet, was aber wegen der hohen Transportkosten wenig praktikabel ist. Daher sind aufkonzentrierte Latices zu bevorzugen. Das häufigste Verfahren dafür ist das Zentrifugieren. Ein solcher ist durch die Reduzierung von Nichtkautschukbestandteilen besonders für Klebemassen geeignet. Die Verwendung von Spezialtypen mit besonders geringem Eiweißanteil (DPNR = deproteinized rubber) ist möglich, ist aber aus wirtschaftlichen Gründen nicht sinnvoll. Durch Eindampfen hergestellter Revertex-Latex ist geeignet, bei Versuchen hat sich herausgestellt, daß er für die erfindungsgemäße Anwendung auf etwa 60 % mit Wasser verdünnt werden sollte. Er ist weniger scherempfindlich als Zentrifugenlatex, hat aber teilweise geringere Klebkräfte der daraus gefertigten Klebemassen ergeben als bei Verwendung von Zentrifugenlatex, Geeignet sind auch Latices, die durch Aufrahmen (z. B. nach Behandlung mit Ammoniumalginat) oder Elektrodekantieren hergestellt sind. Die Verwendung von Zentrifugenlatex wird für die erfindungsgemäße Anwendung bevorzugt.

Als besonders geeignet hat sich die Qualität High Ammonia (HA) bzw. Full Ammonia mit 0,5 - 0,7 % Ammoniak herausgestellt. Die Qualität LA-TZ (low ammonia mit ca. 0,2 % Ammoniak und Thiuramstabilisierung) ist fast genauso geeignet, ist aber etwas empfindlicher in der Verarbeitung. Zur Steuerung des Molekulargewichtes des Kautschuks kann der Naturlatex mit Chemikalien wie Hydroxylaminhydrochlorid behandelt werden, was die Scherfestigkeit der Klebemasse verringert aber die Verarbeitungsviskosität der Klebemasse positiv beeinflußt. Durch die Behandlung mit Bleichmitteln wie Natriumhydrogensulfit kann eine helle Farbe erzielt werden. SP/PA Qualitäten (superior processed rubber with prevulvcanisation) wie Revultex können zusätzlich verwendet werden und ergeben höhere Scherfestigkeit der Klebemasse. OENR (oil-extended natural rubber) ist eine Alternative zur Zumischung von Weichmachern in dem erfindungsgemäßen Verfahren. Es gibt Latices aus synthetisch hergestellten Isoprenkautschuken, die im Sinne des Patents mit unter die Bezeichnung Naturkautschuklatex fallen sollen. Dies sind z. B. Latices aus High-cis-Polyisopren, epoxiderter oder gepropfter Naturkautschuk (z. B. mit Methylmethacrylat wie Hevea Plus MG 49).

Neben Naturkauschuklatex kann man eine oder mehrere synthetischen Latices zusätzlich verwenden, beispielsweise auf der Basis SBR, cSBR, BAN, NBR, EVAc, SBS, SEBS, SIS, PU, BR, IIR, ACM oder XIIR.

Neben Naturkauschuklatex kann man zusätzlich einen oder mehrere halbflüssige bis feste Elastomere mit verwende, zusätzlich verwenden. Dies sind z. B. SBR, cSBR, BAN, NBR, EVAc, SBS, SEBS, SIS, PU, BR, IIR, ACM, oder XIIR oder Naturkautschuke wie Crepe, SMRL, CV 40, CV 50, CV 40 und chemisch oder mechanisch abgebaute Typen wie Lorival® oder flüssigen synthetischen Polyisoprenen. Naturgemäß darf der Anteil nicht zu hoch werden, insbesondere bei Typen mit hoher Mooney-Viskosität, da dann die eingangs beschriebenen Probleme auftreten. Im Fall der Modifierung einer Naturkautschukhaftklebemasse aus konventionellem Kautschuk durch Naturkautschuklatex können die Nachteile wie hohe Schmelzviskosität und niedrige Scherfestigkeit des Klebers reduziert werden.

Geeignete Klebrigmacher sind beispielsweise Kohlenwasserstoffharze, z. B. aus ungesättigten C5 oder C7 Monomeren, Terpenphenolharze, Terpenharze aus Rohstoffen wie α- oder β-Pinen, Kolophonium und seine Folgeprodukte wie disproportionierte, dimerisierte oder veresterte Harze, wobei Glycole, Glycerin oder Pentaerythrit eingesetzt werden können sowie weitere wie aufgeführt in Ullmanns Enzyklopädie der technischen Chemie, Band 12, S. 525 - 555 (4. Aufl.), Weinheim.

Geeignete und Pigmente sind beispielsweise Ruß, Titandioxid, Calciumcarbonat, Zinkcarbonat, Zinkoxid, Silicate, Kieselsäure, Metallpulver sowie Voll- und Hohlkugeln aus Glas, Polymeren oder Keramik.

Geeignete Weichmacher sind beispielsweise aliphatische, cycloaliphatische und aromatische Mineralöle, flüssige Kautschuke (z. B. Nitril-, Polybutadien- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Geeignete Vernetzungsharze sind beispielsweise Phenolharze oder halogenierte Phenolharze, Melamin- und Formaldehydharze, Maleinimide und strahlenhärtbare Mittel wie Triallylcyanurat, mehrfunktionelle Ester der Acryl- und Methacryläure.

### Träger

Zur Beschichtung eignen sich die für Klebebänder üblichen Folien wie z. B. aus Polypropylen, insbesondere mono- und biaxial verstrecktes Polypropylen, Polyethylen, Polyester wie PEN und PET, PVC hart und weichgemacht, Polyimid oder Metallfolien so wie Folien, die aus solchen und anderen Rohstoffen durch Coextrusion oder Mischung hergestellt.

Zur Beschichtung eignen sich weiterhin Vliese (Nonwovens) z. B. aus Polypropylen, Polyester, Polyamid oder Cellulosefasern.

Papiere und Gewebe sind besonders geeignet, da sie besonders wärmestabil und zugfest sind und deshalb auch mit einem Zweiwalzenauftragswerk verarbeitet werden können. Zur Beschichtung eignen sich z. B. Papiere aus natürlichen Fasern wie Zellstoff, aber auch unter Verwendung von Synthesefasern, welche vorzugsweise imprägniert sind beispielsweise mit NBR, SBR, Polyurethan-, PVD- oder Acrylatlatex ggf. kombiniert mit Papierweichmachern wie Polyolen und deren Derivate oder reaktive Harze (z. B. auf Formaldehydbasis). Besonders geeignet sind Papiere mit einer Bruchdehnung von > 5 %, die durch Kreppung und andere Hersteilverfahren erreicht werden, sie eignen sich besonders zum Verkleben auf gekrümmten Oberflächen.

Zur Beschichtung eignen sich weiterhin Gewebe, diese können z. B. aus synthetischen Fasern wie Zellwolle (Rayon), Polyamid oder Polyester oder aus Naturfasern wie Baumwolle oder Hanffasern bestehen.

Die Träger können auch Laminate sein, die unter Mitverwendung genannter Materialien durch Kaschierung hergestellt sind. Auch können die Träger durch Strahlenbehandlung modifiziert sein.

Alle genannten Träger können mit Oberflächenbehandlungen versehen sein. Dies sind z. B. zur Haftvermittlung Corona-, Flamm- oder Plasmabehandlung oder Beschichtungen von Lösungen oder Dispersionen oder flüssige strahlenhärtbare Materialien. Weitere mögliche Beschichtungen sind Bedruckungen und Antihaftbeschichtungen, z. B. solche aus vernetzten Silikonen, Acrylaten (z. B. Primal™ 205), Polymeren mit Vinylidenchlorid oder Vinylchlorid als Monomer oder Stearylverbindungen wie Polyvinylstearylcarbamat, Chromstearatkomplexen (z. B. Quilon™ C) oder Umsetzungsprodukten aus Maleinsäureanhydridcopolymeren und Stearylamin.

Unter Trägern sollen hier auch Trennfolien und Trennpapiere verstanden werden, die dazu geeignet sind, die Klebemasse vorläufig zu tragen in einem weiteren Schritt auf das gewünschte Substrat zu übertragen.

### Prüfmethoden

Die in den Beispielen genannten Meßergebnisse wurden bei Normklima nach DIN 50014 -23/50- Teil 1 ermittel. tDie Klebkraft auf Stahl bzw. Trägerrückseite erfolgte nach PSTC 1. Der Masseauftrag wurde durch Differenzwägung nach Abwaschen der Klebemasse mit Hexan bestimmt. Die Scherfestigkeit (Holding Power) wurde analog PSTC 7 bei 23° C bestimmt, jedoch mit Variationen. Methode A mit einer Belastung von 10 N und einer Verklebungsfläche von 20 mm Länge und 13 mm Breite, Methode B mit einer Belastung von 20 N und einer Verklebungsfläche von 20 mm Länge und 13 mm Breite und Methode C mit einer Belastung von 10 N und einer Verklebungsfläche von 25 mm Länge und 25 mm Breite.

Zur Charakterisierung des Kautschuks wurden der K-Wert und die Mooney-Viskosität herangezogen. Die Berechnung des K-Wertes aus der relativen Viskosität ist bei Fikentscher, Cellulose-Chemie 13 (1932), S. 58 ff und Polymer 8 (1967), S. 381 ff beschrieben. Die Viskosität einer 1 %ige Lösung vom Naturkautschuk in Toluol wird in einem Vogel-Ossag-Viskosimeter nach DIN 51561 gemessen. Der Latex wurde vor dem Lösen in Toluol in dünner Schicht auf einem Silikonpapier bei 90 °C getrocknet. Im Fall von Klebemasse wurde die Einwaage so gewählt, daß sich rechnerisch 1 % Kautschuk im Toluol ergibt (die übrigen Klebemassebestandteile werden als Lösungsmittel gerechnet). Die Lösungen wurden vor Messung flitriert. Die Mooney-Viskosität wurde nach ASTM D 1646 geprüft.

### Beispiele

### Beispiel 1

71.7 kg Zentrifugenlatex (Weber&Schaer, Qualität High Ammonia) wurden in einem Behälter mit Balkenrührer vorgelegt, anschließend 1 kg Santovar A (Monsanto, Antioxidant), 15 kg Zinkoxid Weißsiegel (Grillo Zinkoxid, Zinkoxid) und 41 kg Escorez 1202 (Exxon, Kohlenwasserstoffharz, vor Gebrauch gepulvert mit einer Teilchengröße < 1 mm) portionsweise zugefügt. Während der Zugabe des Harzes stieg die Viskosität stark an, am Ende bildete sich um den Rührer ein fester feuchter Klumpen. Dieser wurde in einem Schaufelkneter (double Z blade) 15 min bei 130 °C geknetet, der entstehende Wasserdampf wurde durch Einblasen von Stickstoff ausgetrieben.

Das Auftragswerk besteht aus zwei geheizten Stahlwalzen mit nachgeschalteter Kühlwalze, Bahnspannungs- und Seitensteuerungseinrichtung sowie Auf- und Abwicklungsvorrichtung. Der ausgerüsteter Papierträger SC/042 P (60 g/m², Gessner) wurde nach Umschlingung einer Walze von oben mit 10 m/min. in den Spalt eingeführt, die Walzen waren auf 170 °C vorgeheizt. Die vorgetrocknete Klebemasse wurde aus dem Kneter kontinuierlich mit einer Austragsschnecke von oben in den Spalt vordosiert und im Spalt in dünner Schicht auf das Papier übertragen.

Das Produkt wurde aufgewickelt und anschließen in 19 mm breite Rollenmuster geschnitten.

Technische Daten des erhaltenen Musters:
- Masseauftrag: 50 g/m²
- Klebkraft Stahl: 3,5 N/cm
- Klebkraft Rückseite: 2,0 N/cm
- Scherfestigkeit Stahl (Methode C): > 3000 min

Verklebungstest: Ein Aluminiumblech wurde mit KH Karosserielack VWL 041ALD630 041 12/FD 07 9103-0101 lackiert, 30 min bei 160 °C in einem Umluftofen gelagert und anschließend auf Raumtemperatur abgekühlt. Eine Papiermaske wurde mit einem Streifen des zu prüfenden Klebebandes auf dem lackierten Blech verklebt. Dieser Verbund wurde 1 Std. bei 60°C in einem Ofen gelagert. Nach dem Abkühlen auf 23 °C ließ sich der Klebestreifen leicht und rückstandsfrei vom Blech ablösen.

Weitere Muster wurden auf Glas und Resopal verklebt. Nach 24 Std. bei 25 °C lassen sich die Klebestreifen leicht und rückstandsfrei abziehen.

### Beispiel 2

Es wurde eine Klebemasse der Zusammensetzung wie in Beispiel 1 hergestellt. Hierzu wurde ein Doppelschneckenextruder (modifizierter Leistritz-Extruder) verwendet. In den Einfüllstutzen (1. Zone) wurden der auf 90 °C vorgewärmte Latex, das Antioxidant und der Füllstoff kontinuierlich zugegeben. Die übrigen Rohstoffe wurden bei 100 °C in einem Mischer vorgebatcht und als Schmelze in der 2. Zone kontinuierlich zugegeben. In der 3. und 4. Zone befand sich ein Entgasungsteil zum Entfernen des Wasser. Die trockene Klebmasse wurde aus der Düse (5. Zone) direkt in den Spalt eines Walzenauftragswerks ausgetragen. Temperatur 1. Zone 100 °C, 2. Zone 100 °C, 3. Zone 130 °C, 4. Zone 170 °C, 5. Zone 170 °C. Als Beschichtungssubstrat wurde ein entschlichtetes ungefärbtes Zellwoll-Gewebe in Leinwandbindung mit einer Fadenstellung 30/30 Fäden/cm und einer Garnstärke von 20/20 tex gewählt. Die Klebkraft auf Stahl wurde mit 4.1 N/cm und der Masseauftrag mit 115 g/m² ermittelt.

### Beispiel 3

31,7 kg Zentrifugenlatex (Metallgesellschaft, Qualität High Ammonia) und 40 kg Kagetex KV 50 (Zentrifugenlatex von Metallgesellschaft, Mooney 50, K-Wert 108), 1 kg Santovar A (Monsanto, Antioxidant), 15 kg Zinkoxid Weißsiegel (Grillo Zinkoxid, Zinkoxid), 3 kg Vulkaresen PA 130 (Hoechst, Vulkanisationsharz) und 47 kg Escorez 1202 (Exxon, Kohlenwasserstoffharz-Granulat) wurden einem Planetwalzenextruder mit 3 Segmenten zugeführt. Bei 145 °C wurde das Wasser abgedampft, die Komponenten gemischt und die erhaltene Schmelze dem Spalt eines Walzenauftragswerkes zugeführt.

Als Papierträger wurde Endura 92785 (Specialty Paper Board) eingesetzt. Die Beschichtung erfolgte wie in Beispiel 1, mit nachfolgender Vulkanisation 20 sec bei 150 °C

Technische Daten des erhaltenen Musters:
- Masseauftrag: 45 g/m²
- Klebkraft Stahl: 3,1 N/cm
- Klebkraft Rückseite: 2,5 N/cm
- Scherfestigkeit Stahl (Methode B): 1200 min

### Beispiel 4

Zentrifugenlatex wurde in einem Behälter vorgelegt, dann werden unter langsamen Rühren Weichmacher, Antioxidant und Harzpulver zugefügt. Die Massen wurden in einen Kneter umgefüllt und 15 min bei 150 °C unter Stickstoffzugabe entwässert. Die erhaltene heiße Trockenmasse wurde in einem Dreiwalzenauftragswerk zwischen einem Walzenpaar dosiert und gegen die dritte Walze auf eine 25 µm starke Polyesterfolie (Mylar A, DuPont) übertragen. Die Folie war einseitig jeweils mit Isocyanat und Cyclokautschuk als Haftvermittler bzw. mit Polyvinylstearycarbamat (Release Coat K von Hoechst) als Trennschicht vorbehandelt. Das resultierende Muster wurde unter Stickstoff mit Elektronenstrahlung behandelt (Dosis 20 kGy).

Die Tabelle zeigt die Zusammensetzung der Klebemassen und Eigenschaften des resultierenden Klebebandes.

| Rohstoff/Lieferant | Gew.-Teile |
|---|---|
| Zentrifugenlatex HA | 43,8 |
| Nuaturkautschuk CV 50 | 24,0 |
| MBG 212/Hercules | 46,0 |
| Hercures A 10 / Hercules | 7,0 |
| Irganox 1010/Ciba-Geigy | 0,3 |
| ZDBC | 0,6 |
| Masseauftrag (g/cm²) | 23 |
| Klebkraft Stahl (N/cm) | 2,6 |
| Scherfestigkeit (Methode B) (min) | 225 |

### Beispiel 5

Die festen Massebestandteile wurden in Pulverform in einen 40 °C warmen Schaufelkneter gegeben und unter Rühren der Latex zugefügt. Die Beschichtung der Klebemasse erfolgte wie in Beispiel 4. Als Substrat wurde 35 µm starke Polypropylenfolie (MB 250, Mobil) gewählt, die beidseitig mit Isocyanat und Cyclokautschuk als Haftvermittler vorbehandelt war. Die Beschichtung erfolgte unter gleichen Bedingungen wie in Beispiel 4, die Klebemasse wurde jedoch auf Purex Release Film Type 46 (Teijin, Polyesterfolie beidseitig mit schwer trennendem Silikon beschichtet) aufgetragen und auf die Trägerfolie übertragen. Im nächsten Arbeitsgang wurde auch die andere Seite der Trägerfolie mit Klebemasse versehen und beim Aufwickeln eine Trennfolie auskaschiert. Die Messungen erfolgten auf der offenen Seite des resultierenden doppelseitigen Klebbandes.

| Rohstoff/Lieferant | Gew.-% |
|---|---|
| Zentrifugenlatex Full Ammonia/Nordmann-Rassmann | 83,8 |
| MBG 212/Hercules | 46,0 |
| Bevilite 20 L/Bergvik | 7,0 |
| Irganox 1010/Ciba-Geigy | 0,3 |
| Perkazit ZDBC/Akzo | 0,6 |
| Masseauftrag (g/cm²) | 25 |
| Klebkraft Stahl (N/cm) | 2,4 |
| Scherfestigkeit (Methode B) (min) | 700 |

### Beispiel 6

Zentrifugenlatex wurde in einem Behälter vorgelegt, dann werden unter langsamen Rühren Weichmacher, Antioxidant und Harzpulverzugefügt. Die Klebemasse war eine hochviskose Flüssigkeit und konnte auf einer Lösungsmittel-Laborbeschichtungsanlage mit Streichbalken auf ausgerüsteten Papierträger beschichtet werden. Die Trocknung erfolgte bei 1 m/min in einem 4 m langen Kanal bei 135 °C.

| Rohstoff/Lieferant | Beispiel 6 |
|---|---|
| Zentrifugenlatex Full Ammonia/Weber&Schaer | 80,0 |
| Revultexlatex/Metallgesellschaft | 1,8 |
| Hercolyn D-E/Hercules | 10,0 |
| Piccotac 212/Hercules | 45,0 |
| Lowinox 22 M 46/Chem. Werke Lowi | 0,2 |
| Masseauftrag (g/cm²) | 70 |
| K-Wert der trockenen Klebemasse | 162 |
| Klebkraft Stahl (N/cm) | 2,0 |
| Scherfestigkeit (Methode A) (min) | 8511 |

### Beispiele 7 bis 10

Zentrifugenlatex wurde in einem Behälter vorgelegt, dann werden unter langsamen Rühren Weichmacher, Antioxidant, Harzpulver und zuletzt Füllstoffzugefügt. Die Klebemassen waren halbflüssig bis klebrig-fest, diejenige mit Füllstoff bildeten kleine klebfreie Stücke. Die Klebemassen wurden wie in Beispiel 1 beschrieben in einem Zweiwalzenauftragswerk auf Papier SC/042 P beschichtet. Die Tabelle zeigt die Zusammensetzung der Klebemassen in Gew.-% und Eigenschaften des resultierenden Klebebandes.

| Rohstoff/Lieferant | Beispiel 7 | Beispiel 8 | Beispiel 9 | Beispiel 10 |
|---|---|---|---|---|
| Zentrifugenlatex Full Ammonia/Weber&Schaer | 81,8 | 81,8 | 86,4 | 72,7 |
| Hercures A 10/Hercules | 10,0 | - | - | - |
| Nipol 1312 LV/Zeon Chemical | - | 10,0 | - | 7,0 |
| Ondina G 33/Shell | - | - | 5,0 | - |
| Piccotac 212/Hercules | 45,0 | 45,0 | 47,5 | 31,0 |
| Irganox 1010/Ciba-Geigy | - | - | - | 1,0 |
| Lowinox 22 M 46/Chem. Werke Lowi | 0,2 | 0,2 | 0,2 | - |
| Kreide Microsöhl 40/Vereinigte Kreidewerke Damman | - | - | - | 21,0 |
| Masseauftrag (g/cm²) | 80 | 25 | 20 | 125 |
| K-Wert der tr. Klebemasse | 159 | 167 | 149 | - |
| Klebkraft Stahl (N/cm) | 2,2 | 2,2 | 1,2 | 0,9 |
| Scherfestigkeit (Methode A) (min) | 15545 | 462 | 551 | 2540 |

K-Wert der verwendeten getrockneten Latexcharge (nach Trocknung): 165.

### Vergleichsbeispiel 1

Die Rezeptur wurde analog Beispiel 1 zusammengestellt, wobei der Zentrifugenlatex durch festen Kautschuk (Qualität SMRL 5, Wallace-Platizität P₀ 42, K-Wert 145, mit 3 % Talkum auf 8 bis 12 mm Größe granuliert) ersetzt wurde. Berechnungsgrundlage: 1 kg Latex entsprechen dabei 0,6 kg Festkautschuk, da der Zentrifugenlatex etwa 60 % Kautschuk und ca. 1,5 % sonstige nichtflüchtige Begleitstoffe enthält. Der Kautschuk wurde unter langsamer Zugabe von Hexan in einem Kneter vorgequollen, sodann die übrigen Rohstoffe zugegeben wurden und zuletzt mit Hexan eine streichfähige Klebemasse erhalten wurde. Der Festgehalt wurde mit 22 Gew.-% und ein K-Wert von 140 ermittelt. Ein Ausstrich auf das in Beispiel 1 genannte Papier ergab das Muster einem Klebmasseauftrag von 42 g/m², einer Scherfestigkeit (Methode C) von 400 min, einer Klebkraft aus Stahl von 3,7 N und einer Klebkraft auf der Rückseite von 1,6 N/cm. Der Restlösemittelanteil beträgt 2 g/m² und wurde durch Headspace-GC ermittelt.

Mit diesem Versuch wurde ein dem Beispiel 1 und 2 vergleichbare Qualität erreicht, jedoch wurde ein Teil des Lösemittels bei der Trocknung der Klebemasse in die Umwelt emittiert und ein weiterer Anteil verbleibt im Produkt. Beispiel 2 hat gegenüber Vergleichsbeispiel 1 auch noch den Vorteil der kontinuierlichen Herstellung und Beschichtung der Klebemasse, was mit dem Lösungsmittelverfahren bisher praktisch nicht durchführbar ist.

### Vergleichsbeispiel 2

Die Rezeptur wurde analog Beispiel 1 zusammengestellt, wobei der Zentrifugenlatex durch festen Kautschuk (Pale Crepe, Wallace-Plastizität P₀ 43, K- Wert 159, mit 3 % Talkum auf 8 bis 12 mm Größe granuliert) ersetzt wurde. Die Komponenten wurden bei 140 °C in einem Banbury so lange geknetet, bis die Klebemasse fast stippenfrei war. Sie ist sehr weich und klebrig, der K-Wert wurde mit 95 ermittelt. Die Beschichtung und Prüfung erfolgte wie im Beispiel 1. Die Scherfestigkeit (Methode C) wurde 20 min bestimmt, im Verklebungstest wurden vollflächig starke Klebemassenrückstande auf dem Lack festgestellt. Um die Scherfestigkeit der Klebemasse in einen anwendungsgerechten Bereich zu bringen, wurde ein Klebestreifen mit Elektronenstrahlen behandelt (Dosis 50 kGy, Beschleunigungsspannung 350 kV). Die Scherfestigkeit wurde durch die Bestrahlung auf 300 min angehoben. Obwohl dieser Wert für die Anwendung immer noch nicht ausreichend ist, wurde der Verklebungstest wiederholt. Beim Abziehen reißt das Klebeband ab. Bei Wiederholung des Versuches wurde das gleiche negative Ergebnis erzielt. Das Papier ist durch die Bestrahlung versprödet. Eine Prüfung der Reißkraft an einem unverklebten Musterstreifen ergab, daß die Reißkraft durch Bestrahlen nur um 20 % zurückging. Die Versprödung tritt jedoch durch die Wärmebehandlung im Lacktrocknungsofen auf. Bei einem dritten Verklebungsversuch wurden bei extrem vorsichtigem Abziehen vollflächig schwache Klebemassenrückstande auf dem Lack festgestellt. Der Versuch einer noch stärkeren Strahlenvernetzung zur weiteren Verbesserung der Scherfestigkeit (Methode C) auf > 1000 min macht wegen der Versprödung des imprägnierten Papiers keinen Sinn. Mit einem konventionellen Verfahren der Herstellung von Schmelzhaflklebern, wie z. B. bei Verwendung thermoplastischer Kautschuke wie SIS üblich, ist es also nicht möglich ein brauchbares Lackierklebeband herzustellen.

### Vergleichsbeispiel 3

Die Herstellung der Klebemasse erfolgte wie in Beispiel 2, jedoch mit folgender Rezeptur.

| Rohstoff/Lieferant | Gew.-% |
|---|---|
| Naturkautschuk SMRL 5 | 46,0 |
| MBG 212/Hercules | 46,0 |
| Bevilite 20 L/Bergvik | 7,0 |
| Irganox 1010/Ciba-Geigy | 0,3 |
| Perkazit ZDBC/Akzo | 0,6 |

Die erhaltene heiße Klebemasse wies eine K-Wert von 85 auf. Sie wurde in einem Dreiwalzenauftragswerk zwischen einem Walzenpaar dosiert und gegen die dritte Walze auf eine 35 µm starke Polypropylenfolie (MB 250, Mobil) übertragen. Die Folie war einseitig jeweils mit Isocyanat und Cyclokautschuk als Haftvermittler bzw. mit Polyvinylstearylcarbamat als Trennschicht vorbehandelt. Das resultierende Muster hatte einen Masseauftrag von 28 g/m² und eine Scherfestigkeit (Methode B) von 15 min. Es wurde unter Stickstoff mit Elektronen bestrahlt (Dosis 50 kGy). Die Scherfestigkeit (Methode B) wurde dadurch auf 90 min. erhöht, was für ein Kartonverschlußklebeband noch bei weitem zu gering ist. Ein leerer Karton wurde mit dem Klebestreifen verschlossen und an einem Fenster aufgestellt. Der Klebestreifen scherte innerhalb eines Tages ab und der Karton öffnete sich. Nach 4 Wochen war der Klebestreifen auf der Sonnenseite versprödet. Daher wurden Klebebandstreifen unter einer sog. Solila (Sonnenlichtlampe)gelagert. Bei dieser Versuchsanordnung strahlen vier im Quadrat angeordnete Lampen mit je 10 cm Abstand auf die Proben, welche auf eine auf 30 °C temperierte Metallplatte in 30 cm Abstand zu den Lampen gelegt wurden. Das Ergebnis wurde auf eine Folienprobe bezogen, die weder den Elektronenstrahlen noch den Lampen ausgesetzt war (definiert als 100 %), die Messung erfolgte in Maschinenrichtung (MD).

| Eigenschaft | Folie | Muster mit Elektronenbestrahlung | Desgl. zusätzlich mit 3 d Solila | Desgl. zusätzlich mit 6 d Solila |
|---|---|---|---|---|
| Bruchdehnung | 100 | 60 | 32 | 6 |
| Reißkraft | 100 | 92 | 53 | 32 |

Die Folie versprödet also extrem durch Kombination von Elektronen- und UV-Strahlung. Ein Kartonverschlußklebeband mit einem Naturkautschuk-Schmelzhaftkleber ist also nicht möglich, wenn man nicht das erfindungsgemäße Verfahren anwendet.

Bei einem Vergleichsversuch mit einem Klebeband mit gleicher Trägerfolie, jedoch ohne Elektronenbestrahlung, trat die Versprödung nicht ein.

### Vergleichsbeispiel 4

0,35 kg Tixosil 331 (Füllstoff von Gustav Grolmann) und 0,1 kg fein gepulvertes Antioxidant BKF (Antioxidant von Bayer) wurden in 2,2 kg einer 10 Gew.-%igen Lösung von Arkopal N 300 (Emulgator von Hoechst) eingerührt. In einem zweiten Gefäß wurden 5,9 kg Zentrifugenlatex vorgelegt, dann 10,7 kg Tacolyn 100 (Klebharzdispersion von Hercules) und zuletzt die vorbereitetet Tixosil-Aufschlämmung unter vorsichtigem Rühren zugegeben.

Die fertige Klebemasse wurde vorsichtig mit einem Handrakel auf eine mit Cyclokautkautschuk vorbehandelte Polyesterfolie von 25 µm Dicke aufgetragen und 5 min bei 110 °C in einem Umluftschrank getrocknet. Der Masseauftrag wurde mit 18 g/m² bestimmt, die Klebkraft beträgt 1,3 N/cm.

Einer Laborstreichanlage mit Rakel wurde mit gleicher Folie bestückt und die Geschwindigkeit auf 10 m/min eingestellt. Die Temperatur des 4 m langen Kanals betrug 130 °C. Die restliche Klebemasse sollte vor das Rakel gepumpt werden. Sowohl mit einer Zentrifugal-, Peristalitik- als Zahnradpumpe gelang es nicht zu fördern, weil die klebemasse sofort koagulierte. Daher wurde die Klebmasse neu angesetzt auch langsam mit einem Becher vor das Rakel gegossen. Nach 20 sec traten hinter dem Rakel auf der Bahn die ersten Gelteichen auf und nach 3 min mußte der Versuch abgebrochen werden, da das Rakel voller Klumpen war.

## Patentansprüche

1. Verfahren zur Herstellung einer Haftklebemasse, dadurch gekennzeichnet, daß man Klebrigmacher in dispergierter, geschmolzener oder fester Form mit Naturkautschuklatex mischt, wobei der Wassergehalt maximal 45 Gew.-% beträgt.

2. Verfahren nach Anspruch 1, dadurch gekennzeichnet, daß der Wassergehalt maximal 25 Gew.-% beträgt.

3. Verfahren nach Anspruch 1, dadurch gekennzeichnet, daß die Haflklebemasse einen K-Wert von mindestens 80 aufweist.

4. Verfahren nach Anspruch 1,dadurch gekennzeichnet, daß die Haftklebemasse einen K-Wert von mindestens 125 aufweist.

5. Verfahren nach Anspruch 1, dadurch gekennzeichnet, daß die Haftklebemasse einen K-Wert von mindestens 140 aufweist.

6. Verfahren nach Anspruch 1, dadurch gekennzeichnet, daß das Mischen in einem Kneter oder Extruder vorgenommen wird.

7. Verfahren nach Anspruch 1, dadurch gekennzeichnet, daß die Haftklebemasse vor der Weiterverarbeitung, insbesondere vor dem Beschichten, in einem Kreter oder Extruder durch Wärme oder Unterdruck getrocknet wird.

8. Verfahren nach Anspruch 1, dadurch gekennzeichnet, daß die Haftklebemasse durch einen Extruder getrocknet und die erhaltende Schmelze kontinuierlich einem Auftragswerk zugeführt wird.

9. Verfahren nach Anspruch 1, dadurch gekennzeichnet, daß die Haftklebemasse einem Extruder und einer Beschichtungsdüse zugeführt wird.

10. Verfahren nach Anspruch 1, dadurch gekennzeichnet, daß die Haftklebemasse einem Extruder und einem Walzenauftragswerk zugeführt wird

11. Verfahren nach Anspruch 1, dadurch gekennzeichnet, daß die Haftklebemasse als weitere Zusatzstoffe Antioxidantien, Füllstoffe, Pigmente oder Weichmacher enthält.

12. Verfahren nach Anspruch 1, dadurch gekennzeichnet, daß die Haftklebemasse als weitere Zusatzstoffe einen festen oder flüssigen Kautschuk enthält.

13. Verfahren zur Herstellung eines Klebebandes oder Etiketts, dadurch gekennzeichnet, daß eine Haftklebemasse erhalten nach Anspruch 1 bis 11 auf Papier, Folie oder Gewebe direkt oder indirekt beschichtet wird.

14. Klebeband oder Etikett, hergestellt nach Anspruch 13.
